# EUROPÄISCHE PATENTSCHRIFT

(11) **EP 1 659 226 B1**
(45) Veröffentlichungstag und Bekanntmachung des Hinweises auf die Patenterteilung: **17.06.2009**
(21) Anmeldenummer: 05019444.8
(22) Anmeldetag: 07.09.2005
(51) Int. Cl.: E03C 1/04

(54) **Frostschutzeinrichtung für eine Wasserauslaufarmatur**
Apparatus for protection against freezing for a water tap
Système de protection contre le gel pour robinet d'eau

(30) Priorität: 22.11.2004 DE 202004018113 U
(43) Veröffentlichungstag der Anmeldung: 24.05.2006
(73) Patentinhaber: Reich KG, Regel- und Sicherheitstechnik, 35713 Eschenburg-Wissenbach (DE)
(72) Erfinder: Bender, Steffen, 35713 Eschenburg (DE)
(74) Vertreter: Patentanwälte Hofstetter, Schurack & Skora

(56) Entgegenhaltungen:
- EP-A1- 1 143 078
- DE-A1- 2 161 762
- DE-A1- 3 138 414
- DE-A1- 4 445 321
- US-A- 3 469 603

## Beschreibung

Die vorliegende Erfindung betrifft eine Wasserauslaufarmatur mit einer Frostschutzeinrichtung , insbesondere für den Einsatz in einem Wohnwagen, Caravan oder Motorcaravan, mit einem an einem Armaturenkörper angeordneten und von diesem wegzeigenden Wasserauslaufrohr, wobei das Wasserauslaufrohr an dem dem Armaturenkörper gegenüberliegenden Ende einen Wasserauslauf aufweist.

Eine Vielzahl derartiger Wasserauslaufarmaturen ist bekannt. Die in Caravans, Motorcaravans oder Mobilheimen im Küchenbereich sowie im Bereich der Waschräume eingesetzten Wasserauslaufarmaturen entsprechen weitestgehend in Funktion und Technik den im Haushaltsbereich verwendeten Armaturen. Im Gegensatz zum Haushaltsbereich werden die Armaturen im Caravan oder Motorcaravan naturgemäß Temperaturen unter 0° C ausgesetzt. Dies führt bei einer mit Wasser gefüllten Armatur durch die expandierende und damit sprengende Wirkung des entstehenden Eises zu einer Zerstörung wichtiger Bauteile bzw. Dichtungseinrichtungen der Wasserauslaufarmaturen. Insbesondere im Bereich des Wasserauslaufrohrs befinden sich immer größere Mengen Wassers, die bei der Expansion unter Frosteinfluss entsprechend große Schäden verursachen können, da das Wasserauslaufrohr in der Regel fest arretiert ist und somit eine Zerstörung der Verbindung bzw. der Dichtung zwischen dem Auslaufrohr und dem Armaturenkörper erfolgt. Die Arretierung erfolgt in der Regel mittels Verschraubungen, Schweißungen, Klebungen sowie Hinterschnappungen, die wie die Praxis gezeigt hat, regelmäßig durch die frostbedingte Verschiebung des Auslaufrohrs zerstört werden. Die Folge ist eine Leckage der Armatur im normalen Betrieb, die in der Regel nicht reparabel ist. Die betroffene Wasserauslaufarmatur muss ersetzt werden. Dies ist aufgrund der beengten Einbauverhältnisse in Caravans bzw. Motorcaravans mit erheblichem Aufwand und Kosten verbunden. Um diese Frostschäden nunmehr zu verhindern, wurde vorgeschlagen, das gesamte Wassersystem des Caravans, Motorcaravans oder Mobilheims komplett zu entleeren. Die Praxis zeigt jedoch, dass die Entleerung häufig nicht durchgeführt wird bzw. aufgrund eines überraschenden Frosteinbruchs nicht rechtzeitig erfolgen kann.

Aus DE-A-31.38.414 ist eine Wasserauslaufarmatur mit einer Steckverbindung zwischen Wasserauslaufrohr und Armaturenkörper, die dient zur wahlweisen Positionierung des Wasserauslaufrohres, bekannt.

Es ist daher Aufgabe der vorliegenden Erfindung, eine gattungsgemäße Frostschutzeinrichtung für eine Wasserauslaufarmatur, insbesondere für den Einsatz in einem Wohnwagen, Caravan oder Motorcaravan, bereitzustellen, die einerseits den geschilderten Praxisanforderungen gerecht wird und eine frost- bzw. druckbedingte Zerstörung der Wasserarmatur, insbesondere im Verbindungsbereich zwischen Armaturenkörper und Auslaufrohr zuverlässig verhindert.

Gelöst wird diese Aufgabe durch eine Frostschutzeinrichtung mit den Merkmalen des Anspruchs 1.

Vorteilhafte Ausgestaltungen sind in den Unteransprüchen beschrieben.

Eine erfindungsgemäße Frostschutzeinrichtung für eine Wasserauslaufarmatur, insbesondere für den Einsatz in einem Wohnwagen, Caravan oder Motorcaravan, weist ein an einem Armaturenkörper angeordneten und von diesem wegzeigendes Wasserauslaufrohr auf, wobei das Wasserauslaufrohr an dem Armaturenkörper gegenüberliegenden Ende einen Wasserauslauf aufweist, wobei erfindungsgemäß das Wasserauslaufrohr mit dem Armaturenkörper oder einem mit dem Armaturenkörper verbundenen und davon abzweigenden Verbindungsrohr mittels einer Steckverbindung lösbar verbunden ist und die Steckverbindung aus mindestens einem axial beweglichen Sicherungsstift besteht, wobei der Sicherungsstift derart ausgebildet ist, dass er bei einem Überschreiten des vordefinierten Drucks im Bereich der Steckverbindung axial nach außen geschoben wird und die Verbindung zwischen dem Armaturenkörper oder dem Verbindungsrohr und dem Wasserauslaufrohr gelöst wird. Durch die erfindungsgemäße Lösung der automatisch lösbaren Arretierung des Wasserauslaufrohrs ist gewährleistet, dass dieses durch das gefrierende und damit expandierende Wasser verschoben werden kann. Eine Zerstörung der Verbindung zwischen dem Armaturenkörper und dem Auslaufrohr wird damit zuverlässig verhindert. Insbesondere kann nach Ende des Frosteinflusses das Auslaufrohr wieder auf das Anschlussstück geschoben werden und durch Eindrücken des Sicherungsstifts wieder arretiert werden. Die Wasserauslaufarmatur ist damit wieder voll funktionsfähig. Durch den Einsatz der erfindungsgemäßen Frostschutzeinrichtung ist es zudem nicht notwendig, das gesamte Wassersystem des Wohnwagens, Caravans oder Motorcaravans zu entleeren.

In einer vorteilhaften Ausgestaltung der Erfindung ist der Sicherungsstift in einer durchgehenden Öffnung des Armaturenkörpers geführt und in einer entsprechenden Ausnehmung des Wasserauslaufrohrs verrastet. Dabei kann das Wasserauslaufrohr mindestens eine hinter der Ausnehmung in Richtung des Wasserauslaufs angeordnete Ringnut zur Aufnahme eines Dichtungsrings aufweisen. Des Weiteren sind vorteilhafterweise die Übergangsbereiche zwischen der Ausnehmung und einer Außenfläche des Wasserauslaufrohr zumindest teilweise abgerundet ausgebildet. Eine entsprechende Ausbildung der Frostschutzeinrichtung gewährleistet ein sicheres Herausgleiten des Sicherungsstifts aus der Ausnehmung des Wasserauslaufrohrs, da die Übergangsbereiche zwischen der Ausnehmung und der Außenfläche des Wasserauslaufrohrs zumindest teilweise abgerundet ausgebildet sind. Der Dichtungsring gewährleistet eine dichtende Verbindung zwischen dem Wasserauslaufrohr und des Armaturenkörpers.

In einer weiteren vorteilhaften Ausgestaltung der Erfindung ist der Sicherungsstift in einer durchgehenden Öffnung des Wasserauslaufrohrs geführt und in einer entsprechenden Ausnehmung des Verbindungsrohrs verrastet. Dabei kann das Verbindungsrohr mindestens eine Ausnehmung in Richtung des Wasserauslaufs angeordnete Ringnut zur Aufnahme eines Dichtungsrings aufweisen. Zudem sind die Übergangsbereiche zwischen der Ausnehmung und einer Außenfläche des Verbindungsrohrs zumindest teilweise abgerundet ausgebildet. Eine derartige erfindungsgemäße Ausgestaltung der Frostschutzeinrichtung gewährleistet ein sicheres Herausgleiten des Sicherungsstifts bei Druckbeanspruchung aus der Ausnehmung des Verbindungsrohrs. Die Anordnung des Dichtungsrings gewährleistet eine dichtende Verbindung zwischen dem Verbindungsrohr des Armaturenkörpers und des Wasserauslaufrohrs.

In einer weiteren vorteilhaften Ausgestaltung der Erfindung ist der Sicherungsstift zumindest teilweise mit einer Signalfarbe versehen. Durch diese Maßnahme ist das Auslösen der Frostschutzeinrichtung sofort erkennbar.

In einer weiteren vorteilhaften Ausgestaltung der Erfindung sind die Dichtungsringe zumindest teilweise in einer Signalfarbe ausgeführt. Auch durch diese Maßnahme wird sofort und leicht die Verschiebung des Wasserauslaufrohrs gegenüber dem Armaturenkörper erkennbar.

Weitere Einzelheiten, Merkmale und Vorteile der Erfindung sind in den nachfolgend beschriebenen und zeichnerisch dargestellten Ausführungsbeispielen näher erläutert. Es zeigen:
- Figur 1a: eine schematische Darstellung einer erfindungsgemäßen Frostschutzeinrichtung;
- Figur 1b: eine Detaildarstellung der Frostschutzeinrichtung gemäß Figur 1a in einer geschlossenen Stellung;
- Figur 1c: eine Detaildarstellung der Frostschutzeinrichtung gemäß Figur 1a in einer offenen Stellung;
- Figur 2a: eine schematische Darstellung einer erfindungsgemäßen Frostschutzeinrichtung gemäß einer zweiten Ausführungsform;
- Figur 2b: eine Detaildarstellung der Frostschutzeinrichtung gemäß Figur 2a in einer geschlossenen Stellung; und
- Figur 2c: eine Detaildarstellung der Frostschutzeinrichtung gemäß Figur 1a in einer offenen Stellung.

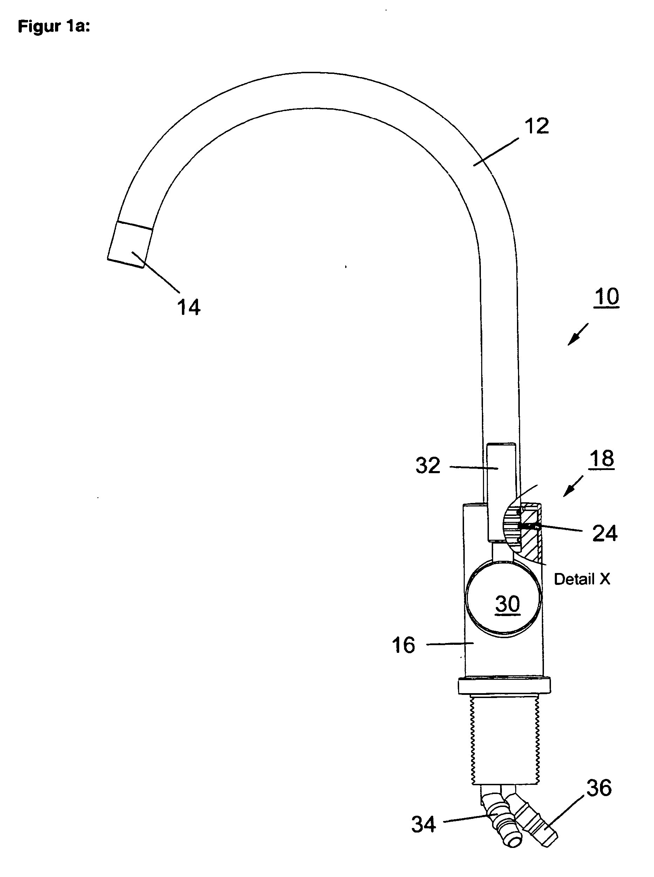

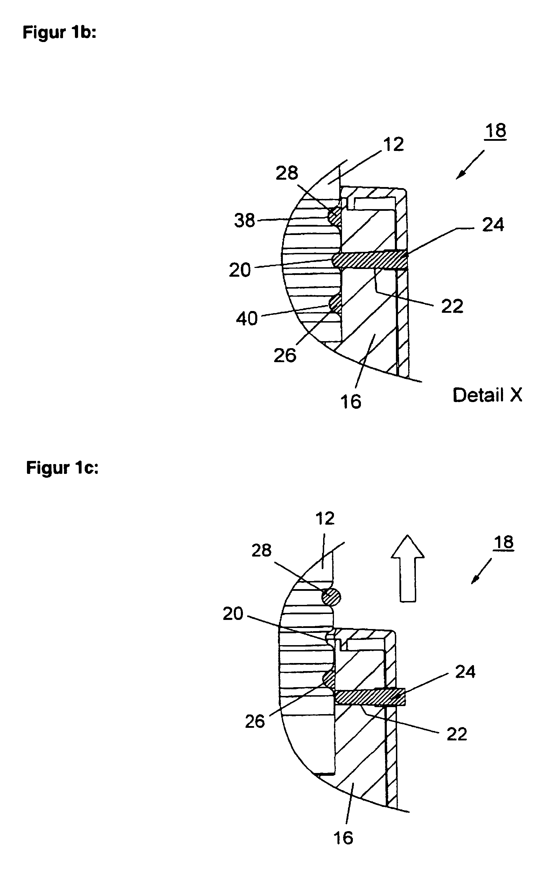

Figur 1a zeigt eine schematische Darstellung einer Frostschutzeinrichtung 10 für eine Wasserauslaufarmatur, insbesondere für den Einsatz in einem Wohnwagen, Caravan oder Motorcaravan. Die Wasserauslaufarmatur weist dabei ein an einem Armaturenkörper 16 angeordnetes und von diesem wegzeigendes Wasserauslaufrohr 12 auf, wobei das Wasserauslaufrohr 12 an dem dem Armaturenkörper 16 gegenüberliegenden Ende einen Wasserauslauf 14 aufweist. Der Armaturenkörper 16 ist in der dargestellten Ausführungsform Teil einer Mischbatterie 30 mit einem entsprechenden Regulierhebel 32. Für den Zulauf von Kalt- und Warmwasser weist die Mischbatterie 30 zudem zwei Wasseranschlüsse 34, 36 auf. Man erkennt, dass das Wasserauslaufrohr 12 mit dem Armaturenkörper 16 mittels einer Steckverbindung 18 lösbar verbunden ist. Die Steckverbindung 18 besteht dabei aus einem axial beweglichen Sicherungsstift 24, der derart ausgebildet ist, dass er bei einem Überschreiten eines vordefinierten Drucks im Bereich der Steckverbindung 18 axial nach außen, d. h. aus dem Armaturenkörper 16 heraus, geschoben wird und die Verbindung zwischen dem Armaturenkörper 16 und dem Wasserauslaufrohr 12 gelöst wird. Deutlich erkennbar wird dies in den Figuren 1b und 1c, die jeweils eine Detaildarstellung der Frostschutzeinrichtung bzw. der Steckverbindung 18 in einer geschlossenen und in einer offenen Stellung darstellen.

So wird aus Figur 1b deutlich, dass der Sicherungsstift 24 in einer durchgehenden Öffnung 22 des Armaturenkörpers 16 geführt ist und in einer entsprechenden Ausnehmung 20 des Wasserauslaufrohrs 12 verrastet. Damit ist eine sichere Verbindung zwischen dem Armaturenkörper 16 und dem Wasserauslaufrohr 12 gewährleistet. Des Weiteren erkennt man, dass das Wasserauslaufrohr 12 jeweils eine vor und hinter der Ausnehmung 20 angeordnete Ringnuten 38, 40 zur Aufnahme von jeweils eines Dichtungsrings 26, 28 aufweist. Die Dichtungsringe 26, 28 gewährleisten die dichtende Verbindung zwischen dem Wasserauslaufrohr 12 und dem Armaturenkörper 16. Aus der Detailzeichnung wird zudem deutlich, dass die Übergangsbereiche zwischen der Ausnehmung 20 und der Außenfläche des Wasserauslaufrohrs 12 abgerundet ausgebildet sind. Damit ist ein leichtes Herausgleiten des Sicherungsstifts 24 aus der Ausnehmung 20, wie dies in Figur 1c dargestellt ist, möglich.

Aus Figur 1c wird zudem deutlich, dass nach einem Herausgleiten des Sicherungsstifts 24 aus der Ausnehmung 20 die Verbindung zwischen dem Wasserauslaufrohr 12 und dem Armaturenkörper 16 gelöst ist, so dass das Wasserauslaufrohr 12 vom Armaturenkörper 16 gelöst werden kann. Dies geschieht zum Beispiel durch die Druckwirkung des zu Eis erstarrenden Wassers innerhalb der Wasserauslaufarmatur.

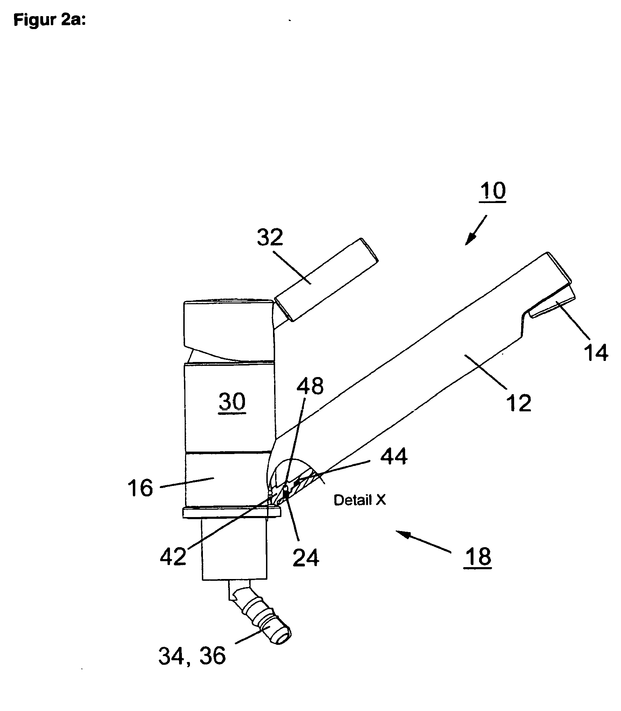

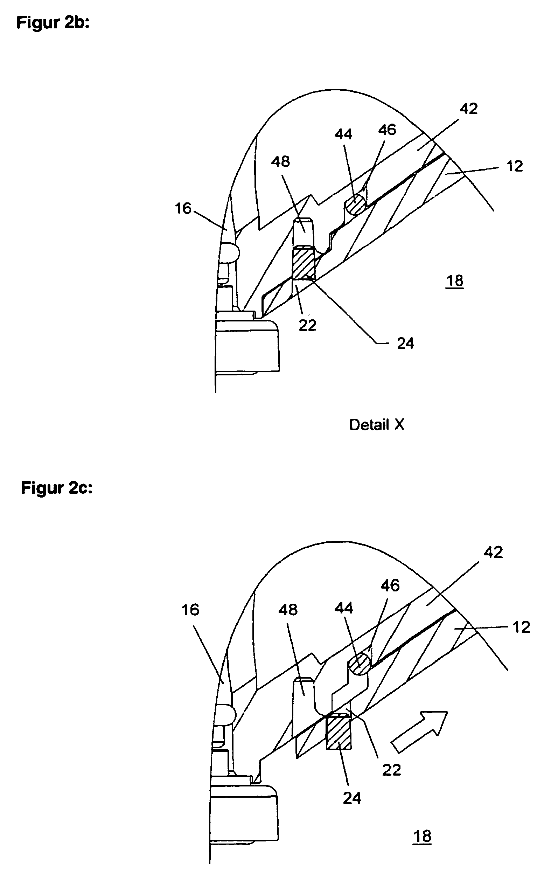

Figur 2a zeigt eine schematische Darstellung einer Frostschutzeinrichtung gemäß einer zweiten Ausführungsform. Man erkennt, dass das Wasserauslaufrohr 12 über ein vom Armaturenkörper 16 abzweigendes Verbindungsrohr 42 mit diesem verbunden ist. Dabei ist das von dem Armaturenkörper 16 abzweigende Verbindungsrohr wiederum mittels der Steckverbindung 18 lösbar verbunden. Die Steckverbindung 18 besteht aus dem axial beweglichen Sicherungsstift 24, wobei der Sicherungsstift 24 gemäß diesem Ausführungsbeispiel derart ausgebildet ist, dass er bei einem Überschreiten eines vordefinierten Drucks im Bereich der Steckverbindung 18 axial nach außen, d. h. aus dem Wasserauslaufrohr 12, geschoben wird und die Verbindung zwischen dem Verbindungsrohr 42 und dem Wasserauslaufrohr 12 so gelöst wird. Deutlich erkennbar wird dies durch die in den Figuren 2b und 2c gezeigten Detaildarstellungen der Frostschutzeinrichtung bzw. der Steckverbindung 18.

Die Figur 2b zeigt die Steckverbindung 18 in einer geschlossenen Stellung. Man erkennt, dass der Sicherungsstift 24 einer durchgehenden Öffnung 22 des Wasserauslaufrohrs 12 geführt ist und in einer entsprechenden Ausnehmung 48 des Verbindungsrohrs 42 verrastet. Somit ist eine sichere Verbindung zwischen dem Wasserauslaufrohr 12 und dem Verbindungsrohr 42 des Armaturenkörpers 16 gewährleistet. Des Weiteren erkennt man, dass das Verbindungsrohr 42 eine hinter der Ausnehmung 48 in Richtung des Wasserauslaufs 14 angeordnete Ringnut 46 zur Aufnahme eines Dichtungsrings 44 aufweist. Der Dichtungsring 44 gewährleistet eine dichtende Verbindung zwischen dem Wasserauslaufrohr 12 und dem Verbindungsrohr 42 bzw. dem Armaturenkörper 16. Des Weiteren erkennt man, dass ein Übergangsbereich zwischen der Ausnehmung 48 und einer Außenfläche des Verbindungsrohrs 42 abgerundet ausgebildet ist. Es handelt sich dabei um den in Richtung des Wasserauslaufs 14 weisenden Übergangsbereich. Wie aus Figur 2c deutlich erkennbar wird, gewährleistet dieser abgerundete Übergangsbereich ein leichtes Herausgleiten des Sicherungsstifts bei Druckbeanspruchung im Bereich der Steckverbindung 18. Man erkennt, dass nach einem Herausgleiten des Sicherungsstifts 24 aus der Ausnehmung 48 das Wasserauslaufrohr 12 von dem Verbindungsrohr 42 lösbar ist, so dass eine Zerstörung dieser Verbindung durch übermäßige Druckeinwirkung zuverlässig verhindert wird.

Der Sicherungsstift 24 der gezeigten Ausführungsformen kann zudem zumindest teilweise mit einer Signalfarbe versehen sein, Entsprechendes gilt für die Ausgestaltung der Dichtungsringe 28, 44. Üblicherweise bestehen das Wasserauslaufrohr 12 und/oder der Armaturenkörper 16 und/oder das Verbindungsrohr 42 aus Kunststoff, Metall oder einer Metall-Legierung.

## Patentansprüche

1. Wasserauslaufarmatur mit einer Frostschutzeinrichtung, insbesondere für den Einsatz in einem Wohnwagen, Caravan oder Motorcaravan, mit einem Armaturenkörper (16) mit an dem Armaturenkörper (16) angeordneten und von diesem wegzeigenden Wasserauslaufrohr (12), wobei das Wasserauslaufrohr (12) an dem Armaturenkörper (16) gegenüberliegenden Ende einen Wasserauslauf (14) aufweist, wobei das Wasserauslaufrohr (12) mit dem Armaturenkörper (16) oder einem mit dem Armaturenkörper (16) verbundenen und davon abzweigenden Verbindungsrohr (42) mittels einer Steckverbindung (18) lösbar verbunden ist, wobei ferner,
die Steckverbindung (18) aus mindestens einem axial beweglichen Sicherungsstift (24) besteht, wobei der Sicherungsstift (24) derart ausgebildet ist, dass er bei einem Überschreiten eines vordefinierten, durch eine frostbedingte Verschiebung des Wasserauslaufrohrs (12) erzeugten Drucks im Bereich der Steckverbindung (18) axial nach außen geschoben wird und die Arretierung mittels der Steckverbindung (18) zwischen dem Armaturenkörper (16) oder dem Verbindungsrohr (42) und dem Wasserauslaufrohr (12) automatisch gelöst wird.

2. Wasserauslaufarmatur nach Anspruch 1,
**dadurch gekennzeichnet,**
**dass** der Sicherungsstift (24) in einer durchgehenden Öffnung (22) des Armaturenkörpers (16) geführt ist und in einer entsprechenden Ausnehmung (20) des Wasserauslaufrohrs (12) verrastet.

3. Wasserauslaufarmatur nach Anspruch 2,
**dadurch gekennzeichnet,**
**dass** das Wasserauslaufrohr (12) mindestens eine hinter der Ausnehmung (20) in Richtung des Wasserauslaufs (14) angeordnete Ringnut (38) zur Aufnahme eines Dichtungsrings (28) aufweist.

4. Wasserauslaufarmatur nach Anspruch 2 oder 3,
**dadurch gekennzeichnet,**
**dass** die Übergangsbereiche zwischen der Ausnehmung (20) und einer Außenfläche des Wasserauslaufrohrs (12) zumindest teilweise abgerundet ausgebildet sind.

5. Wasserauslaufarmatur nach Anspruch 1,
**dadurch gekennzeichnet,**
**dass** der Sicherungsstift (24) in einer durchgehenden Öffnung (22) des Wasserauslaufrohrs (12) geführt ist und in einer entsprechenden Ausnehmung (48) des Verbindungsrohrs (42) verrastet.

6. Wasserauslaufarmatur nach Anspruch 5,
**dadurch gekennzeichnet,**
**dass** das Verbindungsrohr (42) mindestens eine hinter der Ausnehmung (48) in Richtung des Wasserauslaufs (14) angeordnete Ringnut (46) zur Aufnahme eines Dichtungsrings (44) aufweist.

7. Wasserauslaufarmatur nach Anspruch 5 oder 6,
**dadurch gekennzeichnet,**
**dass** die Übergangsbereiche zwischen der Ausnehmung (48) und einer Außenfläche des Verbindungsrohrs (42) zumindest teilweise abgerundet ausgebildet sind.

8. Wasserauslaufarmatur nach einem der vorhergehenden Ansprüche,
**dadurch gekennzeichnet,**
**dass** der Sicherungsstift (24) zumindest teilweise mit einer Signalfarbe versehen ist.

9. Wasserauslaufarmatur nach einem der vorhergehenden Ansprüche,
**dadurch gekennzeichnet,**
**dass** die Dichtungsringe (28, 44) zumindest teilweise in einer Signalfarbe ausgeführt sind.

10. Wasserauslaufarmatur nach einem der vorhergehenden Ansprüche,
**dadurch gekennzeichnet,**
**dass** Wasserauslaufrohr (12) und/oder der Armaturenkörper (16) und/oder das Verbindungsrohr (42) aus Kunststoff, Metall oder einer Metall-Legierung bestehen.

## Claims

1. Water discharge fitting including a frost protection means, in particular for the employment in a camper, a caravan or a motor caravan, including a fitting body (16) with a water discharge pipe (12) disposed on the fitting body (16) and pointing away from it, wherein the water discharge pipe (12) has a water discharge (14) at the end opposing the fitting body (16), wherein the water discharge pipe (12) is detachably connected to the fitting body (16) or a connecting pipe (42) connected to the fitting body (16) and branching off from it by means of a plug connection (18),
wherein, further, the plug connection (18) is comprised of at least one axially movable securing pin (24), the securing pin (24) being formed such that it is pushed axially outwards upon exceeding a predefined pressure generated by a displacement of the water discharge pipe (12) caused by frost in the region of the plug connection (18), and the lock between the fitting body (16) or the connecting pipe (42) and the water discharge pipe (12) by means of the plug connection (18) is automatically detached.

2. Water discharge fitting according to claim 1,
**characterized in that**
the securing pin (24) is guided in a continuous opening (22) of the fitting body (16) and engages a corresponding recess (20) of the water discharge pipe (12).

3. Water discharge fitting according to claim 2,
**characterized in that**
the water discharge pipe (12) has at least one annular groove (38) disposed behind the recess (20) towards the water discharge (14) for receiving a sealing ring (28).

4. Water discharge fitting according to claim 2 or 3,
**characterized in that** the transition regions between the recess (20) and an exterior surface of the water discharge pipe (12) are formed at least partially rounded.

5. Water discharge fitting according to claim 1,
**characterized in that**
the securing pin (24) is guided in a continuous opening (22) of the water discharge pipe (12) and engages a corresponding recess (48) of the connecting pipe (42).

6. Water discharge fitting according to claim 5,
**characterized in that**
the connecting pipe (42) has at least one annular groove (46) disposed behind the recess (48) towards the water discharge (14) for receiving a sealing ring (44).

7. Water discharge fitting according to claim 5 or 6,
**characterized in that**
the transition regions between the recess (48) and an exterior surface of the connecting pipe (42) are formed at least partially rounded.

8. Water discharge fitting according to anyone of the preceding claims,
**characterized in that**
the securing pin (24) is at least partially provided with a signal color.

9. Water discharge fitting according to anyone of the preceding claims,
**characterized in that**
the sealing rings (28, 44) are implemented at least partially in a signal color.

10. Water discharge fitting according to anyone of the preceding claims,
**characterized in that**
the water discharge pipe (12) and/or the fitting body (16) and/or the connecting pipe (42) are made of plastic, metal or a metal alloy.

## Revendications

1. Robinetterie de sortie d'eau avec un dispositif antigel, en particulier pour une installation dans une caravane, un camping-car ou une motor home, avec un corps de robinet (16),
muni d'un tuyau de sortie d'eau (12) disposé sur le corps de robinet (16) et dirigé dans le sens opposé par rapport à celui-ci, ledit tuyau de sortie d'eau (12) présentant, à l'extrémité opposée du corps de robinet (16), une sortie d'eau (14), le tuyau de sortie d'eau (12) étant relié de manière amovible, au moyen d'un assemblage par emboîtement (18), au corps de robinet (16) ou à un tuyau de liaison (42), relié au corps de robinet (16) et s'en détachant, l'assemblage par emboîtement (18) se composant en outre au moins d'une goupille de sécurité (24) mobile axialement, la goupille de sécurité (24) étant formée de telle sorte qu'elle est décalée axialement vers l'extérieur, en cas de dépassement d'une pression prédéfinie, produite par le biais d'un déport dû au gel du tuyau de sortie d'eau (12) dans le secteur de l'assemblage par emboîtement (18) et que l'arrêt est automatiquement desserré au moyen de l'assemblage par emboîtement (18) entre le corps de robinet (16) ou le tuyau de liaison (42) et le tuyau de sortie d'eau (12).

2. Robinetterie de sortie d'eau suivant la revendication 1,
**caractérisé en ce que**
la goupille de sécurité (24) est guidée dans une ouverture traversante (22) du corps de robinet (16) et s'enclenche dans un évidement (20) correspondant du tuyau de sortie d'eau (12).

3. Robinetterie de sortie d'eau suivant la revendication 2,
**caractérisée en ce que**
le tuyau de sortie d'eau (12) présente au moins une gorge de retenue (38), disposée derrière l'évidement (20), en direction de la sortie d'eau (14), pour loger une bague d'étanchéité (28).

4. Robinetterie de sortie d'eau suivant la revendication 2 ou 3,
**caractérisée en ce que**
les zones de transition entre l'évidement (20) et une surface extérieure du tuyau de sortie d'eau (12) sont formées au moins partiellement arrondies.

5. Robinetterie de sortie d'eau suivant la revendication 1,
**caractérisée en ce que**
la goupille de sécurité (24) est guidée dans une ouverture traversante (22) du tuyau de sortie d'eau (12) et s'enclenche dans un évidement (48) correspondant du tuyau de liaison (42).

6. Robinetterie de sortie d'eau suivant la revendication 5,
**caractérisée en ce que**
le tuyau de liaison (42) présente au moins une gorge de retenue (46), disposée derrière l'évidement (48), en direction de la sortie d'eau (14), pour loger une bague d'étanchéité (44).

7. Robinetterie de sortie d'eau suivant la revendication 5 ou 6,
**caractérisée en ce que**
les zones de transition entre l'évidement (48) et une surface extérieure du tuyau de liaison (42) sont formées au moins partiellement arrondies.

8. Robinetterie de sortie d'eau suivant l'une des revendications précédentes,
**caractérisée en ce que**
la goupille de sécurité (24) est munie au moins partiellement d'une couleur de signalisation.

9. Robinetterie de sortie d'eau suivant l'une des revendications précédentes,
**caractérisée en ce que**
les bagues d'étanchéité (28, 44) sont exécutées au moins partiellement dans une couleur de signalisation.

10. Robinetterie de sortie d'eau suivant l'une des revendications précédentes,
**caractérisée en ce que**
le tuyau de sortie d'eau (12) et/ou le corps de robinetterie (16) et/ou le tuyau de liaison (42) se composent de matière plastique, de métal ou d'un alliage de métal.
